(19) Europäisches Patentamt
European Patent Office
Office européen des brevets

(11) **EP 1 861 844 B1**

(12) **EUROPEAN PATENT SPECIFICATION**

(45) Date of publication and mention
of the grant of the patent:
**30.05.2012 Bulletin 2012/22**

(51) Int Cl.:
***G09G 3/34*** (2006.01)

(21) Application number: **06744418.2**

(86) International application number:
**PCT/IB2006/000201**

(22) Date of filing: **03.02.2006**

(87) International publication number:
**WO 2006/092679 (08.09.2006 Gazette 2006/36)**

(54) **METHOD AND/OR APPARATUS TO IMPROVE THE VISUAL PERCEPTION OF AN IMAGE DISPLAYED ON A SCREEN**

VERFAHREN UND/ODER ANORDNUNG ZUR VERBESSERUNG DER OPTISCHEN WAHRNEHMUNG EINES BILDES IN EINER ANZEIGE

PROCEDE ET/OU APPAREIL PERMETTANT D'AMELIORER LA PERCEPTION VISUELLE D'UNE IMAGE AFFICHEE SUR UN ECRAN

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.02.2005 IT TO20050090**

(43) Date of publication of application:
**05.12.2007 Bulletin 2007/49**

(73) Proprietor: **SIM2 Multimedia S.p.A.**
**33170 Pordenone (IT)**

(72) Inventors:
• **TOFFOLI, Domenico**
**I-33080 Prata di Pordenone (IT)**
• **RAFFIN, Mario**
**I-33170 Pordenone (IT)**

(74) Representative: **Dini, Roberto**
**Metroconsult S.r.l.**
**Via Sestriere 100**
**10060 None (TO) (IT)**

(56) References cited:
**EP-A- 1 111 578     WO-A-2004/049292**

**Description**

The present invention relates to a method and/or apparatus for improving the visual perception of images displayed on a screen, in particular on a liquid crystal screen (LCD, Liquid Crystal Display).

In particular, the present invention relates to a method and/or apparatus adapted to improve the visual perception of dark images, i.e. low-brightness images, displayed on an LCD screen. As known, LCD screens are illuminated by using a rear-lighting lamp, which is a source of white light.

When displaying images on an LCD screen, a portion of the light produced by the rear-lighting lamp goes through the LCD screen also through pixels which should be off. This phenomenon, called "light leakage", has the consequence of reducing the screen contrast ratio, i.e. the ratio between bright and dark tones of an image displayed on the screen.

According to the state of the art, methods and/or apparatus are known which allow to improve the perception of images displayed on a screen.

For instance, the PCT International Patent Application No. WO 2004/049293 describes a method to improve the perception of images displayed on a screen by measuring the value of a number of parameters, among which the brightness of a frame and that of the single pixels composing it. In relation with the values of the measured parameters, an adjusting circuit generates a global brightness control signal and a local brightness control signal. The global adjustment is carried out by means of an optical diaphragm.

For instance, the US Patent Application No. US 2001/0033260 describes a liquid crystal display (LCD) device comprising a liquid crystal panel, a rear-lighting lamp for illuminating the liquid crystal panel, a section for detecting the luminance characteristics of a frame, and a section for controlling the rear-lighting lamp in order to adjust the light produced by the rear-lighting lamp in accordance with the luminance characteristics of the frame.

Document EP 1111578 describes an image display apparatus displaying a video signal to be inputted on a passive light modulation part including a light source as an image, the apparatus comprising: an amplitude adjustment part dynamically adjusting an amplitude of the video signal to become a predetermined amplitude value; and a light source brightness adjustment part adjusting brightness of said light source according to amplitude adjustment by the amplitude adjustment part so that the image displayed on the passive light modulation part based on the video signal after amplitude adjustment does not vary visually from a predetermined level which is an average brightness level of each frame in the video signal to be inputted.

However, these methods do not take into account the evolution of the scenic contents of the images to be displayed, in that they are based on the analysis of a single image frame and provide for the image adjustment according to it.

Thus, when sudden changes in the scenic contents occur, e.g. during a scene change from a sunny landscape to a poorly lit indoor environment or a night scene, the methods according to the known art do not take into account the marked sensitivity of the human eye to such sudden variations.

The object of the present invention, therefore, is to provide a method and/or apparatus to improve the visual perception of the images displayed on a screen, said method and/or apparatus being effective and operating according to the scenic contents of such images.

This and other objects of the invention are achieved by the method as claimed in the annexed claims.

According to a first aspect of the present invention, a method and/or an apparatus is proposed which exploits the rear-lighting lamp power adjustment and the contrast adjustment in order to obtain higher contrast ratios whenever it is not necessary to use the maximum available lamp power.

The method and/or apparatus according to the invention therefore operates in the darkest scenes, i.e. when the image histogram is unbalanced toward the lowest luminance levels. In such a case, in fact, it is possible to reduce the power of the rear-lighting lamp power, thereby lowering the level of black, and then to recover the intermediate luminance levels by acting on the signal, in particular by increasing the contrast.

Since the method and/or apparatus operates in dark scenes, the levels of white which might be saturated as a consequence of the contrast increase will not produce relevant counterfeits, and the images will be advantageously perceived by the observer as more contrasted.

The method and/or apparatus according to the invention provides a gradual variation of the brightness of the image perceived by the observer, so that such brightness variation will not be perceived by the observer as a disturbing flickering.

Moreover, the method and/or apparatus according to the invention takes into consideration the brightness variations occurring during the scene changes of the images, e.g. when there is a transition from a sunny landscape to a poorly lit indoor environment or a night scene. According to a further aspect of the invention, the following will describe a liquid crystal panel implementing the method according to the present invention and a liquid crystal screen to which said panel is fastened.

The above objects will become apparent from the detailed description of the method and/or apparatus according to the invention, with particular reference to the annexed figures, wherein:

- Fig. 1 shows a basic diagram of the architecture implementing the method and/or apparatus according to the invention;

- Fig. 2 shows a block diagram of an analysis and adjusting block used by the method and/or apparatus according to the invention;

- Fig. 3 is a block diagram which illustrates the detailed operation of a control block contained in the analysis and adjusting block of Fig. 2;
- Fig. 4 shows a graph values of which are stored in a table used by the method and/or apparatus according to the invention.

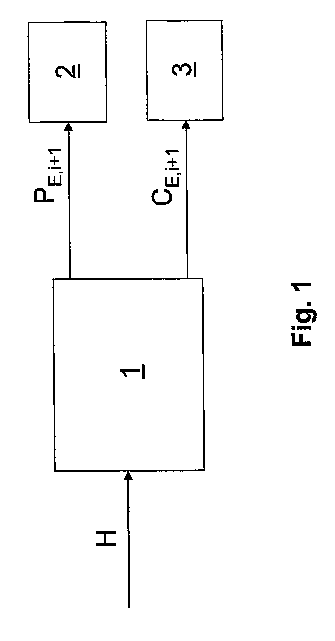

Fig. 1 illustrates a basic diagram of the architecture implementing the method and/or apparatus according to the invention, wherein an image frame H is received by an analysis and adjusting block 1, which analyses a plurality of image frames H and outputs a signal $P_{E,i+1}$ adapted to adjust the power of the rear-lighting lamp of a liquid crystal (LCD) panel, not shown, and a signal $C_{E,i+1}$ adapted to adjust the contrast of the image displayed on a screen, also not shown, to which said panel is fastened.

The signals $P_{E,i+1}$ and $C_{E,i+1}$ are sent to a power adjusting circuit 2 of a rear-lighting lamp and to an image contrast control circuit 3, respectively.

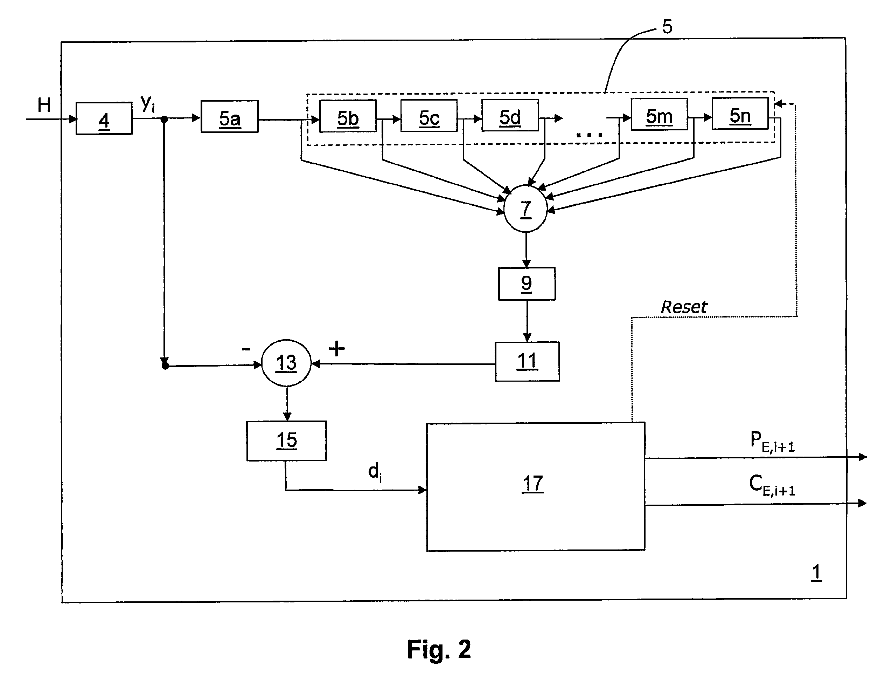

Fig. 2 illustrates in detail the analysis and adjusting block 1, which comprises: a block 4 which calculates the spatially averaged luminance of a frame H; a sliding register 5 made up of $2^N$ cells 5a ... 5n, preferably of 8 bits, wherein N is an integer; a module for calculating the absolute value of the difference between the mean luminance of the current frame $y_i$ and the average of the mean luminances of the previous frames, consisting of a first adder 7, a register 9, a divisor 11, a second adder 13 and a module 15 which calculates the absolute value; and, finally, a control block 17 operation of which will be detailed later.

The analysis and adjusting block 1 may be either implemented in a dedicated microprocessor or provided by advantageously programming a dedicated microprocessor of the LCD panel.

The value of the mean luminance $y_i$ of a frame H at the instant i is obtained from the values of the primary colours R,G,B as specified by the NTSC and PAL standards, which establish the reference chromaticity for the primary colours R,G,B and for white according to the following formula:

$$y_i = 0.299 \cdot R + 0.587 \cdot G + 0.114 \cdot B$$

In practice, the analysis and adjusting block 1 operates as follows.

At each frame H, the mean luminance $y_i$ of the frame H is first calculated in the block 4. The value $y_i$ is then entered in the sliding register 5.

The adder 7 calculates the sum $S_i$ of all the cells of the sliding register 5. This sum $S_i$ is stored in a register 9 and divided by $2^N$ by the divisor block 11 so as to output

the value $S_i/2^N$. This value is subtracted from the value of the mean luminance of the current frame $y_i$ in the adder 13. In the block 15, the absolute value of the value at the output of the block 13 is calculated, so that the block 15 outputs the value $d_i = |(S_i/2^N - y_i)|$.

The value $d_i$ represents the distance between the mean luminance $y_i$ of the current frame and the average of the mean luminances of the previous frames. The value $d_i$ is therefore an indicator of the proximity between the luminance of the current frame i and that of the $2^N$ previous frames. In practice, the analysis and adjusting block 1 acts as a detector of the differential luminance between a frame and the previous ones.

The control block 17 can generate a command signal RESET which sets to $y_i$ all the cells 5a ... 5n of the sliding register 5. The usefulness of this setting will become apparent from the following description.

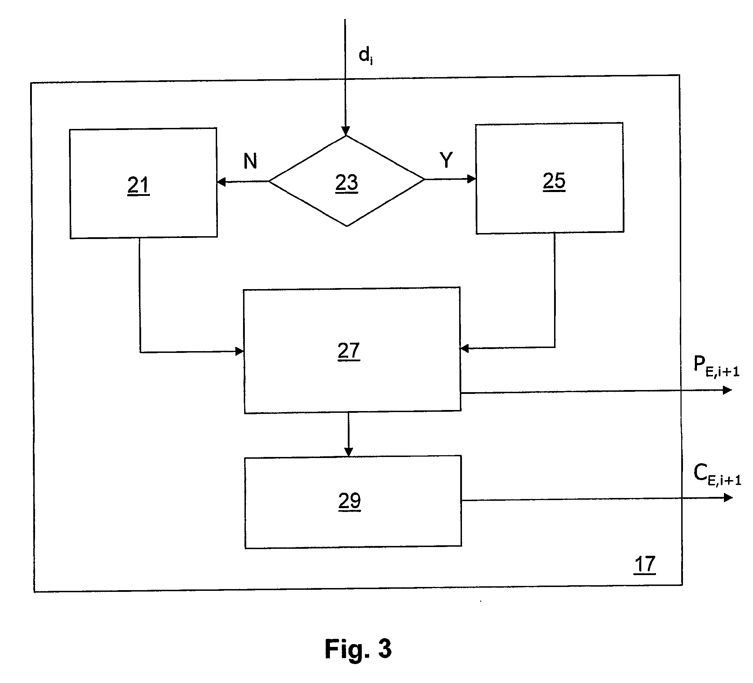

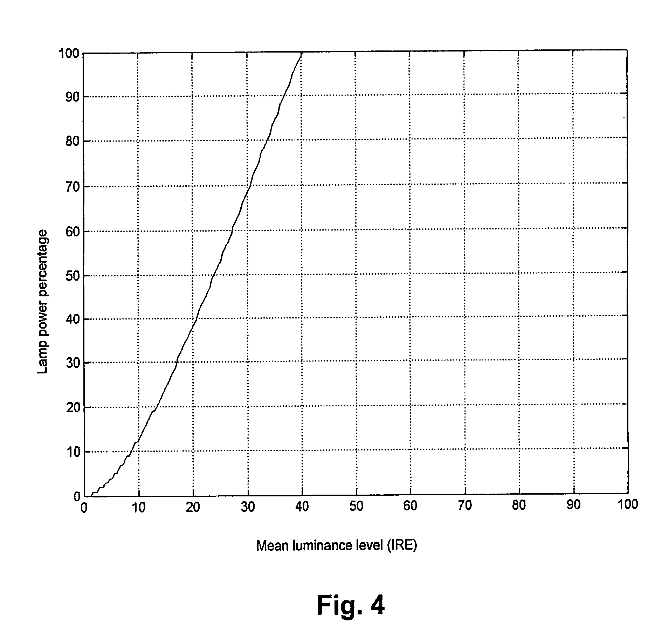

Figs. 3 and 4 respectively illustrate in detail a block diagram describing the operation of the control block 17 and a graph representing a function the values of which are used within the control block 17.

The control block 17 receives the signal $d_i$ from the output of the block 15 and outputs a power adjusting signal $P_{E,i+1}$ of a rear-lighting lamp and a contrast control signal $C_{E,i+1}$. Within the control block 17, the "target" values for power $P_T$ of the lamp and contrast $C_T$ are established.

The "target" values for power of the lamp and contrast are defined according to a function determined empirically by analyzing a wide range of cinematographic scenes.

According to such analysis, every scene has been empirically classified as "bright" or "dark", and for each one of them the mean level of luminance has been detected.

It has been found that the level of discrimination between dark and bright scenes is located at rather low mean luminance levels of approximately 20 IRE (1 IRE = 7.143 mV).

High levels of R,G,B are not typically detected below 10 IRE, so that it is possible to considerably reduce the lamp power, while increasing the image contrast proportionally, without generating heavy counterfeits due to saturation.

Above an average value of 40 IRE, finally, the scenes appear bright and there is no need to reduce the lamp power in order to increase depth in dark colours.

On the basis of these observations, a non-linear fonction $F_x$ has been defined, as shown in Fig. 4, which maps luminance levels, averaged over space and time, to light levels of the rear-lighting lamp.

The function $F_x$ is stored in a Look Up Table $F[\cdot]$.

Since in practice it would not make much sense to turn the lamp completely off (value 0 in Fig. 4), the values on the X axis of Fig. 4 are remapped linearly from the interval [0, 100] to a power value interval $[P_{min}, P_{max}]$ through the following function:

$$P(P') = P_{min} + P'(P_{max} - P_{min})/100$$

wherein $P_{min}$ is a number greater than zero.

By convention it is defined $P_T \in [0, 100]$. Such values are established in such a way that the loss of contrast caused by the lamp power decrease is recovered through a contrast increase within the saturation limits.

For example, by halving the lamp power and doubling the contrast, a mean grey will always have the same brightness, but all greys above the mean grey will become saturated and will have the same brightness as the mean grey.

This adjustment does not cause counterfeits in the image, just because the lamp power reduction is applied in scenes wherein the histogram is concentrated in the low grey levels. Back to the block diagram of Fig. 3, at the step 23 the value $d_i$, which represents the distance between the mean luminance of the current frame i and the average of the mean luminances of the previous frames, is compared with a predefined threshold value $t_L$.

If $d_i \le t_L$, the procedure arrives at the step 25, wherein the value $y_i$ is entered into the sliding register 5 and the "target" power is calculated according to the formula $P_{T,i} = F[round (Si/2^N)]$; otherwise, i.e. if $d_i > t_L$, the procedure arrives at the step 21, wherein the sliding register 5 is reset through the command signal RESET, all the cells 5a ... 5n of the sliding register 5 are initialized to $y_i$, and the "target" power is calculated according to the formula $P_{T,i} = F[y_i]$.

The threshold value $t_L$ is therefore advantageous because it prevents from averaging in time frames having very different scenic contents, such as, for instance, a sunny landscape followed by a night scene. In this way, the method according to the invention takes, into account the marked sensitivity of the human eye to sudden variations of the scenic contents of the image.

At the step 27, a control function recalled periodically every 200 ms sets the effective values of lamp power and contrast, designated $P_{E,i+1}$ ($P_{E,i+1} \in [0, 100]$) and $C_{E,i+1}$, respectively. The value $P_{E,i+1}$ is increased or decreased at each step depending on the "target" value $P_{T,i}$ as follows:

$$\text{if } P_{E,i} < P_{T,i} \rightarrow P_{E,i+1} = P_{E,i} + 1$$

$$\text{if } P_{E,i} = P_{T,i} \rightarrow P_{E,i+1} = P_{T,i}$$

$$\text{if } P_{E,i} > P_{T,i} \rightarrow P_{E,i+1} = P_{E,i} - 1$$

The value $P_{E,i+1}$ is used at the step 29 to calculate the updated contrast value $C_{E,i+1}$ to be provided to the contrast adjusting circuit according to the following formula:

$$C_{E,i+1} = C_{ut,i} + k_c [1 - P_{E,i+1}/100]$$

wherein the constant $k_c$ is determined by setting so that the light emitted by the panel at a given level of grey (such that it is never brought to saturation by contrast variations) remains constant as the power of the rear-lighting lamp and the contrast change as described.

The contrast value $C_{E,i+1}$ is therefore made up of two addends: a first fixed addend $C_{ut}$ being adjustably determined by the user, and a variable addend having the purpose of recovering the brightness lost when reducing the power and therefore also the brightness of the rear-lighting lamp.

It is clear that the above description is provided by way of a non-limiting example, and that variations and changes are possible without departing from the scope of the invention.

**Claims**

1. Method for improving the visual perception of an image displayed on a liquid crystal screen, said method comprising at least steps for:

   - generating an effective power adjusting signal ($P_{E,i+1}$) of a rear-lighting lamp depending on the value of a target power value $P_T$ of said rear-lighting lamp;
   - generating an effective image contrast control signal ($C_{E,i+1}$) depending on said effective power adjusting signal of the rear-lighting lamp, so as to increase, respectively decrease, the contrast of the image displayed on said screen as said effective power adjusting signal ($P_{E,i+1}$) of the rear-lighting lamp decreases, respectively increases, **characterised in** calculating said target power value ($P_T$) as a function of the average of stored values of the mean luminances ($S_i/2^N$) of a predetermined plurality of previous image frames if the distance ($d_i$) between the mean luminance ($y_i$) of a current image frame (H) and the average of the stored values of the mean luminances ($S_i/2^N$) of said predetermined plurality of previous image frames is less or equal to a threshold value ($t_L$), otherwise calculating said target power value ($P_T$) as a function of the mean luminance ($y_i$) of said current image frame (H) and initialising the stored values of the mean luminances of said predetermined plurality of previous image frames to the mean luminance ($y_i$) of the current image frame (H).

**2.** Method according to claim 1, wherein said target power value ($P_T$) is obtained from a table mapping luminance levels, averaged over time and space, to light levels of the rear-lighting lamp, said table having been obtained empirically through observation of a plurality of scenes having different brightness.

**3.** Method according to claim 1, wherein said threshold value ($t_L$) allows to discriminate the scenic contents of a plurality of image frames (H).

**4.** Method according to claim 1, wherein said effective signals for adjusting the power of the rear-lighting lamp ($P_{E,i+1}$) and for controlling the contrast ($C_{E,i+1}$) are generated at predetermined time intervals.

**5.** Method according to claim 4, wherein said time intervals are of 200 ms.

**6.** Method according to claim 1, wherein said effective contrast control signal ($C_{E,i+1}$) is made up of a first fixed addend ($C_{ut,i}$), adjustably determined by a user, and a second variable addend depending on said effective power adjusting signal ($P_{E,i+1}$).

**7.** Method according to claim 6, wherein said second variable addend is given by the formula $k_c \cdot [1\text{-}P_{E,i+1}/100]$, wherein the constant $k_c$ is determined by imposing that the light emitted by said screen at a given level of grey remains constant as the effective power adjusting signal ($P_{E,i+1}$) of the rear-lighting lamp and the contrast control signal ($C_{E,i+1}$) change, thereby recovering the brightness lost when reducing the power of said rear-lighting lamp.

**8.** Apparatus for improving the visual perception of an image displayed on a liquid crystal screen, comprising:

- circuit means (17) for generating an effective power adjusting signal ($P_{E,i+1}$) of a rear-lighting lamp depending on the value of a target power value ($P_T$) of said rear-lighting lamp;
- circuit means (17) for generating an effective image contrast control signal ($C_{E,i+1}$) depending on said effective power adjusting signal ($P_{E,i+1}$), so as to increase respectively decrease, the contrast of the image displayed on said screen as said effective adjusting signal ($P_{E,i+1}$) of the rear-lighting lamp decreases, respectively increases,

**characterised in that** said apparatus further comprises:

- calculation means (5,7,9,11) for calculating the average of stored values of the mean luminances ($S_i/2^N$) of a predetermined plurality of previous image frames;
- calculation means (4,13,15) for calculating the distance ($d_i$) between the mean luminance ($y_i$) of a current image frame (H) and said average of the stored values of the mean luminances ($S_i/2^N$) of said predetermined plurality of previous image frames;
- circuit means (17) adapted to calculate said target power value ($P_T$) as a function of said average of the stored values of the mean luminances ($S_i/2^N$) of said predetermined plurality of previous image frames if said distance ($d_i$) is less or equal to a threshold value ($t_L$), and, if said distance ($d_i$) is greater than said threshold value ($t_L$), to calculate said target power value ($P_T$) as a function of the mean luminance ($y_i$) of said current image frame (H) and to initialise the stored values of the mean luminances of said predetermined plurality of previous image frames to the mean luminance ($y_i$) of the current image frame (H).

**9.** Apparatus according to claim 8, wherein said calculation means (4,5,7,9,11,13,15) and said circuit means (17) are implemented in a dedicated microprocessor of said apparatus.

**10.** Liquid crystal panel and/or screen comprising an apparatus according to one of claims 8 or 9.

**Patentansprüche**

**1.** Verfahren zur Verbesserung einer visuellen Wahrnehmung eines Bildes dargestellt auf einem Flüssigkristallbildschirm, wobei besagtes Verfahren zumindest Schritte zur

- Erzeugung eines effektiven Leistungsanpassungssignal ($P_{E,i+1}$) einer Rücklichtbeleuchtung in Abhängigkeit eines Wertes eines Zielleistungswerts $P_T$ der besagten Rücklichtbeleuchtung;
- Erzeugung eines effektiven Bildkontrastkontrollsignals ($C_{E,i+1}$) in Abhängigkeit von besagtem effektiven Leistungsanpassungssignal der Rücklichtbeleuchtung, sodass der Kontrast des Bildes, welches auf besagtem Bildschirm dargestellt wird, sich erhöht beziehungsweise erniedrigt, so wie besagtes effektives Leistungsanpassungssignal ($P_{E,i+1}$) der Rücklichtbeleuchtung abnimmt, beziehungsweise zunimmt, umfasst,

**dadurch gekennzeichnet,**
**dass** besagter Zielleistungswert ($P_T$) berechnet wird als eine Funktion der mittleren gespeicherten Werte der Durchschnittsluminanz ($S_i/2^N$) einer vorbe-

stimmten Vielzahl von vorhergehenden Bildfeldern, wenn der Abstand ($d_i$) zwischen der Durchschnittsluminanz ($y_i$) eines aktuellen Bildfelds (H) und das Mittel der gespeicherten Werte der Durchschnittsluminanz ($S_i/2^N$) der besagten vorbestimmten Vielzahl von vorhergehenden Bildfeldern weniger oder gleich einem Schwellenwert ($t_L$) ist, ansonsten wird besagter Zielleistungswert ($P_T$) als eine Funktion der Durchschnittsluminanz ($y_i$) des besagten aktuellen Bildfelds (H) berechnet und die gespeicherten Werte der Durchschnittsluminanz der besagten vorbestimmten Vielzahl von vorhergehenden Bildfeldern zur Durchschnittsluminanz ($y_i$) des aktuellen Bildfeldes (H) initialisiert.

2. Verfahren nach Anspruch 1, wobei besagter Zielleistungswert ($P_T$) aus einer Tabelle entnommen wird, welche Luminanzlevel, zu Lichtleveln der Rücklichtbeleuchtung aufzeichnet, die über Zeit und Raum gemittelt sind, wobei die Tabelle empirisch durch die Beobachtung einer Vielzahl von Szenen mit unterschiedlicher Helligkeit erzeugt wurde.

3. Verfahren nach Anspruch 1, wobei besagter Schwellenwert ($t_L$) es erlaubt zwischen den szenischen Inhalten einer Vielzahl von Bildfeldern (H) zu unterscheiden.

4. Verfahren nach Anspruch 1, wobei besagtes effektives Signal zur Einstellung der Leistung der Rücklichtbeleuchtung ($P_{E,i+1}$) und zur Kontrolle des Kontrasts ($C_{E,i+1}$) zu vorgegebenen Zeitintervallen erzeugt wird.

5. Verfahren nach Anspruch 4, wobei besagtes Zeitintervall 200 ms ist.

6. Verfahren nach Anspruch 1, wobei besagtes Kontrastkontrollsignal ($C_{E,i+1}$) aus einem ersten festen Summand ($C_{ut,i}$), welcher von einem Nutzer variabel festlegbar ist, und einem zweiten variablen Summand, welcher von besagtem effektiven Leistungseinstellsignal ($P_{ei+1}$) abhängt, aufgebaut ist.

7. Verfahren nach Anspruch 6, wobei besagter zweiter variabler Summand sich aus der Gleichung $k_c\,[1-P_{E,i+1}/100]$ ergibt, wobei die Konstante $k_c$ durch die Bedingung bestimmt ist, dass das vom besagten Bildschirm emittierte Licht bei einem bestimmten Grauwert konstant bleibt während das effektive Leistungseinstellsignal ($P_{Ei,1}$) der Rücklichtbeleuchtung und das Kontrastkontrollsignal ($C_{E,i+1}$) veränderlich sind, wobei dadurch der Helligkeitsverlust ausgeglichen wird, welcher bei der Reduzierung der Leistung der besagten Rücklichtbeleuchtung entsteht.

8. Vorrichtung zur Verbesserung der visuellen Wahrnehmung eines Bildes dargestellt auf einem Flüssigkristallbildschirm, umfassend:

- Schaltelemente 17 zur Erzeugung eines effektiven Leistungseinstellsignals ($P_{E,i+1}$) der Rücklichtbeleuchtung in Abhängigkeit des Wertes eines Zielleistungswerts ($P_T$) der besagten Rücklichtbeleuchtung;
- Schaltelemente 17 zur Erzeugung eines effektiven Bildkontrastkontrollsignals ($C_{E,i+1}$) in Abhängigkeit von besagtem effektiven Leistungseinstellsignal ($P_{E,i+1}$), sodass der Kontrast des Bildes, welches auf besagtem Bildschirm dargestellt wird, sich erhöht beziehungsweise erniedrigt, so wie besagtes effektives Leistungseinstellsignal ($P_{E,i+1}$) der Rücklichtbeleuchtung abnimmt, beziehungsweise zunimmt,

**dadurch gekennzeichnet,**
**dass** besagte Vorrichtung weiterhin umfasst:

- Berechnungselemente (5, 7, 9, 11) zur Berechnung des Mittels der gespeicherten Werte der Durchschnittsluminanzen ($S_i/2^N$) einer vorbestimmten Vielzahl von vorhergehenden Bildfeldern;
- Schaltelemente 17 vorgesehen zum Berechnen von besagtem Zielleistungswert ($P_T$) als Funktion von besagtem Mittel der gespeicherten Werte der Durchschnittsluminanzen ($S_i/2^N$) der besagten vorbestimmten Vielzahl von Bildfeldern, wenn besagter Abstand ($d_i$) weniger oder gleich einem Schwellenwert ($t_L$) ist und wenn besagter Abstand ($d_i$) größer als besagter Schwellenwert ($t_L$) ist, zum Berechnen von besagtem Zielleistungswert ($P_T$) als eine Funktion der Durchschnittsluminanz ($y_i$) von besagtem aktuellen Bildfeld (H) und zur Initialisierung der gespeicherten Werte der Durchschnittsluminanz von besagter vorbestimmter Vielzahl von vorhergehenden Bildfeldern zur Durchschnittsluminanz ($y_i$) des aktuellen Bildfelds (H).

9. Vorrichtung nach Anspruch 8, wobei besagte Berechnungselemente (4, 5, 7, 9, 11, 13, 15) und besagte Schaltelemente (17) in einem dafür vorgesehenen Mikroprozessor der besagten Vorrichtung implementiert sind.

10. Flüssigkristallelement und/oder Bildschirm umfassend eine Vorrichtung nach Anspruch 8 oder 9.

**Revendications**

1. Procédé permettant d'améliorer la perception visuelle d'une image affichée sur un écran à cristaux liquides, ledit procédé comportant au moins les étapes comprenant le fait de :

- générer un signal effectif de réglage de puissance ($P_{E,i+1}$) d'une lampe de rétro-éclairage en fonction de la valeur d'une valeur de puissance cible $P_T$ de ladite lampe de rétro-éclairage ;
- générer un signal effectif de commande de contraste d'image ($C_{E,i+1}$) en fonction dudit signal effectif de réglage de puissance de la lampe de rétro-éclairage de façon à, augmenter, diminuer, respectivement, le contraste de l'image affichée sur ledit écran lorsque ledit signal effectif de réglage de puissance ($P_{E,i+1}$) de la lampe de rétro-éclairage diminue, augmente, respectivement, **caractérisé par** le calcul de ladite valeur de puissance cible ($P_T$) comme une fonction de la moyenne des valeurs stockées des luminances moyennes ($S_i/2^N$) d'une pluralité prédéterminée de trames d'image précédentes si l'écart ($d_i$) entre la luminance moyenne (yi) d'une trame de l'image en cours (H) et la moyenne des valeurs stockées de la luminance moyenne ($S_i/2^N$) de ladite pluralité prédéterminée des trames d'image précédentes est inférieur ou égal à une valeur de seuil ($t_L$), sinon par le calcul de ladite valeur de puissance cible ($P_T$) comme une fonction de la luminance moyenne (yi) de ladite trame de l'image en cours (H) et en initialisant les valeurs stockées des luminances moyennes de ladite pluralité prédéterminée des trames d'image précédentes à la luminance moyenne (yi) de la trame de l'image en cours (H).

**2.** Procédé selon la revendication 1, dans lequel ladite valeur de puissance cible ($P_T$) est obtenue à partir d'une table représentant des niveaux de luminance, moyennés dans le temps et dans l'espace, pour des niveaux de lumière de la lampe de rétro-éclairage, ladite table ayant été réalisée de façon empirique par l'intermédiaire de l'observation d'une pluralité de scènes présentant une luminosité différente.

**3.** Procédé selon la revendication 1, dans lequel ladite valeur de seuil ($t_L$) permet de discriminer le contenu scénique d'une pluralité de trames d'image (H).

**4.** Procédé selon la revendication 1, dans lequel lesdits signaux effectifs permettant de régler la puissance de la lampe de rétro-éclairage ($P_{E,i+1}$) et de commander le contraste ($C_{E,i+1}$) sont générés à des intervalles de temps prédéterminés.

**5.** Procédé selon la revendication 4, dans lequel lesdits intervalles de temps sont de 200 ms.

**6.** Procédé selon la revendication 1, dans lequel ledit signal effectif de commande de contraste ($C_{E,i+1}$) est constitué d'un premier nombre à ajouter fixe ($C_{ut,i}$)

déterminé de façon réglable par l'utilisateur, et d'un second nombre à ajouter variable en fonction dudit signal effectif de réglage de puissance ($P_{E,i+1}$).

**7.** Procédé selon la revendication 6, dans lequel ledit second nombre à ajouter variable est donné par la formule $k_c \cdot [1-P_{E,i+1}/100]$, dans laquelle la constante $k_c$ est déterminée en imposant que la lumière émise par ledit écran à un niveau donné de gris reste constante lorsque le signal effectif de réglage de puissance ($P_{E,i+1}$) de la lampe de rétro-éclairage et le signal de commande de contraste ($C_{E,i-11}$) varient de façon à récupérer, de ce fait, la luminosité quand on réduit la puissance de ladite lampe de rétro-éclairage.

**8.** Appareil permettant d'améliorer la perception visuelle d'une image affichée sur un écran à cristaux liquides, comportant :

- des moyens de circuit (17) pour générer un signal effectif de réglage de puissance ($P_{E,i+1}$) d'une lampe de rétro-éclairage en fonction de la valeur d'un niveau de puissance cible ($P_T$) de ladite lampe de rétro-éclairage ;
- des moyens de circuit (17) pour générer un signal effectif de commande de contraste d'image ($C_{E,i+1}$) en fonction dudit signal effectif de réglage de puissance ($P_{E,i+1}$) de façon à augmenter, diminuer, respectivement, le contraste de l'image affichée sur ledit écran lorsque ledit signal effectif de réglage de puissance ($P_{E,i+1}$) de la lampe de rétro-éclairage diminue, augmente, respectivement, **caractérisé en ce que** ledit appareil comporte, de plus :
- des moyens de calcul (5, 7, 9, 11) pour calculer la moyenne des valeurs stockées des luminances moyennes ($S_i/2^N$) d'une pluralité prédéterminée de trames d'image précédentes ;
- des moyens de calcul (4, 13, 15) pour calculer l'écart ($d_i$) entre la luminance moyenne (yi) d'une trame d'image en cours (H) et ladite moyenne des valeurs stockées des luminances moyennes de ladite pluralité prédéterminée des trames d'image précédentes ;
- des moyens de circuit (17) adaptés pour calculer ladite valeur de puissance cible ($P_T$) comme une fonction de ladite moyenne des valeurs stockées des luminances moyennes ($S_i/2^N$) de ladite pluralité prédéterminée des trames d'image précédentes si ledit écart ($d_i$) est inférieur ou égal à une valeur de seuil ($t_L$) et, si ladite distance ($d_i$) est plus grand que ladite valeur de seuil ($t_L$), pour calculer ladite valeur de puissance cible ($P_T$) comme une fonction de la luminance moyenne ($y_i$) de ladite trame d'image en cours (H) et pour initialiser les valeurs stockées des luminances moyennes de ladite pluralité prédéterminée de trames d'image précédentes à la luminance moyenne ($y_i$) de la trame d'image en cours (H).

9. Appareil selon la revendication 8, dans lequel lesdits moyens de calcul (4, 5, 7, 9, 11, 13, 15) et lesdits moyens de circuit (17) sont mis en oeuvre dans un microprocesseur dédié dudit appareil.

10. Panneau et/ou écran à cristaux liquides comprenant un appareil selon l'une des revendications 8 ou 9.

**Fig. 1**

**Fig. 2**

EP 1 861 844 B1

**Fig. 3**

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004049293 A
- US 20010033260 A
- EP 1111578 A